# EUROPEAN PATENT APPLICATION

(11) **EP 4 606 668 A1**
(43) Date of publication of application: **27.08.2025**
(21) Application number: 25158353.0
(22) Date of filing: 17.02.2025
(51) Int. Cl.: B60W 30/14

(54) **MOTOR VEHICLE WITH HILL DESCENT CONTROL CONTROLLED BY PEDALS AND RELATIVE CONTROL PROCESS**

(30) Priority: 21.02.2024 IT 202400003670
(71) Applicant: FERRARI S.p.A., 41100 Modena (IT)
(72) Inventor: SAENZ GONZALO, Alberto, 41100 MODENA (IT); CUCCIOLLA, Giorgio, 41100 MODENA (IT); FRANCO, Alberto, 41100 MODENA (IT); GARGIULO, Flavio, 41100 MODENA (IT); MANAZZA, Simone Stefano, 41100 MODENA (IT); SECONDI, Andrea, 41100 MODENA (IT); TAMMARO, Marco, 41100 MODENA (IT); ZACCONE, Alice, 41100 MODENA (IT)
(74) Representative: Studio Torta S.p.A.

(57) **Abstract**

A motor vehicle (1) comprises a propulsion device (3) controllable to accelerate the motor vehicle (1), a braking device (4) controllable to brake the motor vehicle, an accelerator pedal (6), which can be pressed to control an acceleration of the motor vehicle (1) through the propulsion device (3), a brake pedal (5), which can be pressed to control a braking of the motor vehicle (1) through the braking device (4), an activation controller (7) usable by a driver to trigger an activation of a hill descent function control, and a control unit (ECU) configured to start the hill descent control function in response to said activation by setting a target value for a speed of the motor vehicle (1) and by controlling at least one of the braking device (4) and the propulsion device (3) according to the set target value, characterized in that the control unit (ECU) is further configured to perform a change in the set target value based on the use of at least one of the accelerator pedal and the brake pedal (5, 6) and to restart the hill descent control function upon finalization of the change.

## Description

### CROSS-REFERENCE TO RELATED APPLICATIONS

This patent application claims priority from Italian patent application no. 102024000003670 filed on February 21, 2024, the entire disclosure of which is incorporated herein by reference.

### TECHNICAL FIELD

The invention relates to a motor vehicle with a hill descent control function. The invention further relates to a motor vehicle control process, wherein the hill descent control function is performed.

### PRIOR ART

In motor vehicle technology, hill descent control is a well-known function that assists the driver in the descent by autonomously controlling the travel speed of the motor vehicle under gravity acceleration, that is, without the driver intervening on the brake pedal.

In particular, hill descent control permits the setting of a constant value of the travel speed during a descent, so that the function controls the braking system of the motor vehicle such that the actual travel speed converges towards and stabilizes on the set constant value.

A hill descent control apparatus is an apparatus that applies the hill descent control to the motor vehicle and includes at least one control unit configured to perform or start the hill descent control by controlling the braking system of the motor vehicle, for example based on acquired signals indicative of the actual travel speed and, if necessary, of the slope of the descent travelled by the motor vehicle.

The braking system controlled by the control unit can include brakes applied to the wheels, as well as an engine braking assembly for adjusting the braking action that is exerted upon the wheels by the propulsion assembly of the motor vehicle.

The hill descent control can be activated by the driver, if the motor vehicle is actually descending with a speed not exceeding a threshold, by means of an activation control, which can include a button, a lever, a knob, a touch pad and the like.

The activation control is located near the steering wheel, so that it can be easily and quickly reached by the driver through the use of the hands, without the driver having to change posture or abandon the manual control of the steering wheel for a long time.

Usually, the hill descent control automatically sets the value of the travel speed of the motor vehicle as the current value of the actual travel speed at the moment of activation.

However, the motor vehicle usually also has an auxiliary speed setting control, typically in the form of a lever, which can be used by the driver to increase or decrease the value of the travel speed initially set at the moment of activation.

Like the activation control, the speed setting control must be located near the steering wheel, for the same reasons already explained for the activation control.

Although normally satisfactory, the use of the auxiliary setting control still entails a minimum of hardship for the driver, who can therefore suffer a distraction or, in any case, experience a suboptimal vehicle control situation.

Therefore, hill descent control apparatuses and/or the modes of use of the hill descent control function need to be improved, in particular with respect to the ease of setting the travel speed by the driver.

In the light of the above, the object of the invention is to fulfil the need discussed above, preferably in a simple and reliable fashion.

### DESCRIPTION OF THE INVENTION

Said object is reached by a motor vehicle and by a process according to the independent claims.

The dependent claims define special embodiments of the invention.

### BRIEF DESCRIPTION OF THE DRAWINGS

The invention will now be described hereinafter with reference to the accompanying drawings, which show a nonlimiting embodiment thereof, wherein
- figure 1 is a side view of a motor vehicle according to the invention,
- figure 2 is a front view of a steering wheel of the motor vehicle,
- figure 3 is a side view of a component of a pedal control assembly of the motor vehicle,
- figure 4 is a functional block diagram of the motor vehicle, and
- figure 5 is a block diagram representing an operating mode of the motor vehicle.

### EMBODIMENTS OF THE INVENTION

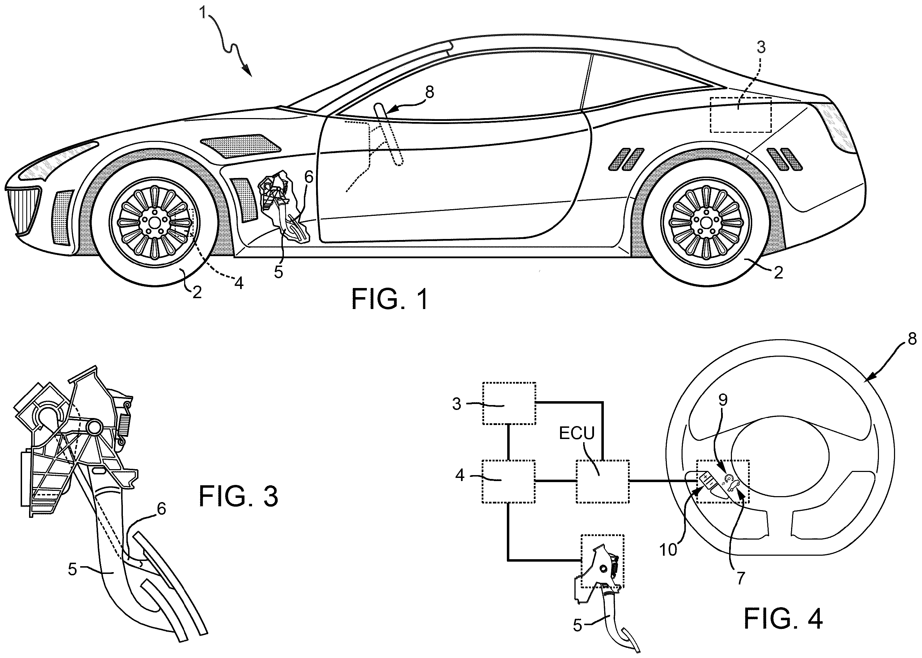

In figure 1, reference number 1 indicates, as a whole, a vehicle or, more precisely, a motor vehicle.

The motor vehicle 1 comprises a plurality of wheels 2, only two of them being visible in figure 1.

Furthermore, the motor vehicle 1 comprises a propulsion device 3, which is schematically shown and can be controlled so as to accelerate the motor vehicle 1. The propulsion device 3, which could comprise an electric motor and/or a heat engine, is connected to the wheels 2 so as to cause them to rotate, thus enabling the acceleration and, therefore, the forward movement of the motor vehicle 1.

Furthermore, the motor vehicle 1 comprises a braking device 4, which is shown in figure 1 in a merely schematic form at one of the visible wheels 2.

This is not limiting, as the braking device 4 could be applied to one or more wheels 2, for example to the front wheels and/or to the rear wheels, without losing generality.

The braking device 4 is configured to brake the motor vehicle 1, in particular under the control of the driver.

The braking device 4 can comprise a device known per se; for example, the braking device 4 can comprise a disc brake or other known types of brake and, if necessary, a servo-actuator, for example of the hydraulic type, which can be controlled so as to operate the brake in known ways, which, therefore, are not described in detail.

Furthermore, the braking device 4 can comprise devices for exerting engine braking actions upon the wheels 2, such as, for example, an automatic transmission unit forming part of a transmission assembly between the propulsion device 3 and the wheels and controllable so as to downshift, thereby increasing an engine braking effect upon the wheels 2, or a proportional shut-off valve on the exhaust duct of a turbocharger of the heat engine of the propulsion device 3.

The braking device 4 could comprise the electric motor of the propulsion device 3, as the electric motor can perform a braking function when it is controlled so as to act as an electric generator.

Furthermore, the motor vehicle 1 comprises a brake pedal 5 and an accelerator pedal 6, which can be depressed by the driver to cause a braking of the motor vehicle 1 through the braking device 4 and an acceleration of the motor vehicle 1 through the propulsion device 3, respectively.

Each of the pedals 5, 6 is movable and can be placed in a plurality of positions, for example according to a direction of movement, between two opposite limit stop positions.

The limit stop positions are defined, in particular, by a rest position, in which the relative one of the pedals 5, 6 does not exert any action upon the corresponding one of the devices 3, 4, and a limit position, in which the movement of the relative one of the pedals 5, 6, starting from the respective rest position, must stop.

Therefore, each of the pedals 5, 6 can be depressed by the driver, in particular by means of a foot, starting from the rest position towards the limit position according to the direction of movement and up to the maximum limit position.

As normal, for example, the acceleration and braking caused by the respective pedals 5, 6 increase as the limit position gets closer, for example in a proportional manner or in a hyperbolic manner or according to any predetermined curve.

Each of the pedals 5, 6 is pivoted around an axis, in particular transversal to the travel direction of the motor vehicle 1 and, more in particular, horizontal.

The motor vehicle 1 further comprises, for each of the pedals 5, 6, a return device (not shown), such as a spring, configured to automatically cause the relative one of the pedals 5, 6 to return to the rest position from any other position following a partial or complete release thereof by the driver, i.e. when it is not depressed by the driver.

In this case, the released one of the pedals 5, 6 makes a return movement from the current position towards the rest position. Clearly, the driver can stop or even reverse the return movement before reaching the rest position, in particular by depressing again the released one of the pedals 5, 6, so that the release is partial.

The release is therefore complete only when the rest position is reached. In general, the generic term "release" will be used in this description to indifferently identify a partial or complete release, unless otherwise specified for specific embodiments.

Alternatively or in addition to the specific example of the spring, the return device 6 could comprise an actuator element configured to cause the return movement, in ways similar to the elastic operation of the spring or according to a dedicated control law, for example non-linear.

The ways in which each of the pedals 5, 6 controls the acceleration and the braking, respectively, of the motor vehicle 1 could be of a known type, so that they are not described in detail.

The motor vehicle 1 comprises an activation controller 7 operable by the driver to trigger an activation of a hill descent control function, hereinafter indicated by the abbreviation HDC.

The HDC function is performed by a control unit ECU of the motor vehicle 1 and comprises or, in other words, is the execution of a control of the travel speed or, more simply, of the speed of the motor vehicle 1, which can exclusively be activated by means of the dedicated controller 7, only if or under the condition that specific predetermined operating conditions of the motor vehicle 1 occur.

The specific operating conditions entail the fact that the motor vehicle 1 is going downhill, namely that the motor vehicle 1 is subjected to an acceleration along its travel direction due to gravity. More precisely, the specific operating conditions entail the fact that the slope of the road travelled by the motor vehicle 1 lies within a predetermined descent slope range, wherein, in particular, the minimum descent slop is greater than zero up to a maximum descent slope.

In addition, the specific operating conditions can include conditions concerning the travel speed or speed of the motor vehicle 1, which, for example, must lie within a predetermined speed range, in particular between a minimum threshold, for example less than 5 km/h but in any case not zero, and a maximum threshold, for example greater than 50 km/h.

Furthermore, the specific operating conditions can entail that the propulsion device 3 is actually coupled to the wheels 2, i.e. that the vehicle is in an engaged-gear state, or in a state of idle in motion, but not, for example, with the automatic transmission unit set to the parking state.

Furthermore, the specific operating conditions can entail that a cruise control function, for example of the adaptive type, is not activated or cannot be activated.

The control unit ECU is configured to determine whether the specific operating conditions are met and to perform or activate the HDC function only if or under the condition that the specific operating conditions are met, even if the driver controls the activation of the HDC function by means of the controller 7. In other words, the control unit ECU does not activate the HDC function if the operating conditions are not met, even if the driver triggers its activation by means of the controller 7.

In particular, the control unit ECU is configured to determine information relating to the speed of the motor vehicle 1 as well as, independently, to the slope of the road travelled by the motor vehicle 1.

Hence, the control unit ECU is configured to start the HDC function in response to the activation by means of the controller 7, in particular only if the determined information indicates that the speed and the slope fall within relative ranges of compatibility with the HDC function, i.e. within the aforementioned predetermined speed range and descent slope range, respectively.

The control unit ECU is preferably configured to extract the information from received signals.

In particular, the speed-related information is extracted from a speed signal, which can be measured by means of a transducer of the motor vehicle 1, for example a speedometer, or estimated by means of one or more indirect measurements of suitable transducers of the motor vehicle 1, such as for example an inertial measuring instrument.

Similarly, although independently, the slope-related information is extracted from a slope signal, which can be similarly measured or estimated, using one or more suitable transducers of the motor vehicle 1.

The transducers are coupled, for example each independently of the other, to the control unit ECU to provide their measurements or the generated signals to the control unit ECU.

The speed control relevant to the HDC function could be, for example, an open-loop or a closed-loop control, without losing generality, based on a target value of the speed itself.

The control unit ECU performs or starts the speed control or the HDC function by setting the target value and by controlling at least one of the devices 3, 4 according to the set target value. More in particular, according to an embodiment, the control unit ECU controls the braking device 4 and not also the propulsion device 3 for the execution of the HDC function or of the speed control.

The control takes place according to a control law to minimize or reduce a difference or discrepancy between the actual value of the speed and the target value.

More precisely, the control law is configured to keep the speed of the motor vehicle 1 substantially constant and equal to the target value, in particular during the descent of the motor vehicle 1.

The control law preferably is a closed-loop control law, but it could be an open-loop control law, without losing generality.

Preferably, the controller 7 is a touch-sensitive portion, in particular of a steering wheel 8 of the motor vehicle 1, although it could also be a button, a lever, a voice control and it could be located in a different place, for example on the instrument panel or dashboard of the motor vehicle 1.

Conveniently, when the HDC function is started, the control unit ECU is configured to trigger the lighting of a symbol 9, for example located on the steering wheel 8, in a distinct way with respect to when the HDC function is deactivated or stopped.

For example, the symbol 9 could light up with distinct colours when the HDC function is started and stopped, respectively, or the lighting could be turned on and off when the HDC function is started and stopped, respectively.

The control unit ECU is configured to perform a change in the set target value, in particular during the execution of the HDC function, based on the use of at least one of the pedals 5, 6.

More in particular, the control unit ECU is configured to restart the HDC function upon finalization of the change in the target value. Basically, upon finalization of the change, the speed control takes place according to the modified target value, in particular according to the aforementioned control law, whereby the speed of the motor vehicle 1 will tend to the new modified target value starting from the finalization of the change.

Specifically, a depressing of the brake pedal 5 will result in a decrease in the target value, whereas a depressing of the accelerator pedal 6 will result in an increase in the target value.

According to a possible example, the control unit ECU could increase and decrease, respectively, the target value for a depressing of the brake pedal 5 and of the accelerator pedal 6, for example as a function of the depressing.

Preferably, alternatively, the control unit ECU is configured to temporarily suspend the HDC function during the depressing of one of the pedals 5, 6, whereby the depressing causes the braking or acceleration of the motor vehicle 1 accordingly.

Therefore, in this case, the pedals 5, 6 perform their function regardless of whether the HDC function is active or not.

In other words, the motor vehicle 1 normally responds to the depressing of the pedals 5, 6, as if the HDC function were deactivated or stopped.

However, this does not mean that the HDC function is actually stopped, but that it is only suspended, i.e. ready to be restarted upon finalization of the change in the target value, in particular automatically, i.e. without further interventions by the driver on the controller 7. Indeed, for example, the lighting of the symbol 9 could remain as at the start of the HDC function.

Specifically, the control unit ECU is configured to finalize the change in the target value upon release of the depressed one of the pedals 5, 6, thus restarting the HDC function upon release.

In particular, the finalization takes place only for a complete release (in other words, the release corresponds to the reaching of the rest position), although this is not strictly limiting. In fact, the finalization could also take place upon any partial or complete release, according to other embodiments.

Preferably, the control unit ECU determines an actual value of the speed upon said release and finalizes the change by causing the target value to be equal to the actual value. For example, the control unit ECU can determine the actual value from the aforesaid speed-related information or speed information extracted, in particular, from the received signals.

Basically, as soon as the release takes place, the HDC function restarts with a modified target value corresponding to the current speed conditions, so that the motor vehicle 1 substantially maintains its speed at the moment of the release due to the restart of the HDC function, i.e., in particular, thanks to the aforementioned control law.

Preferably, in a similar way, the control unit ECU is configured to determine the actual value of the speed at the start or upon activation of the HDC function and to set the target value equal to the actual value at the start or in response to the activation of the HDC function.

Therefore, when the driver triggers the activation of the HDC function by means of the controller 7, only if the specific operating conditions occur, the control unit ECU starts the HDC function by setting the target value as the actual current value, whereby the motor vehicle 1 substantially maintains its speed at the start or upon activation of the HDC function due to the effect of the HDC function itself, i.e., in particular, thanks to the aforementioned control law.

Conveniently, the control unit ECU is configured to stop the HDC function if the speed-related information indicates that the speed exceeds a maximum threshold, for example greater than 50 km/h, or is below a minimum threshold, for example less than 5 km/h. The minimum threshold and the maximum threshold could coincide with the extremes of the speed range with which the HDC function is compatible, i.e. the range in which the speed must necessarily lie in order for the control unit ECU to start the HDC function in response to the driver's activation command by means of the controller 7.

Similarly, the control unit ECU could be configured to stop the HDC function if the slope-related information indicates that the slope of the road travelled by the motor vehicle 1 exceeds a maximum threshold or is below a minimum threshold, which could coincide with the extremes of the descent slope range with which the HDC function is compatible, i.e. the range in which the slope must necessarily lie in order for the control unit ECU to start the HDC function in response to the driver's activation command by means of the controller 7.

When the HDC function is stopped by the control unit, the start of the HDC function can take place again by means of the controller 7, in particular only if the specific operating conditions are met.

Preferably, the motor vehicle 1 further comprises a setting controller 10, which is distinct from the pedals 5, 6 and can be handled by the driver. For example, the setting controller 10 is located at the steering wheel 8, although it could alternatively be located on an instrument panel. In particular, the setting controller 10 is a rotary knob, although it could comprise buttons, touch-sensitive portions and the like.

The setting controller 10 can be used to set the target value in advance with respect to the start of the HDC function. In this case, the control unit ECU does not set the target value as the current actual value of the speed at the start of the HDC function, but uses the target value that was pre-set by means of the setting controller 10.

In addition, the setting controller 10 can also be used to change the target value after the start of the HDC function or when the HDC function is started, in addition to the pedals 5, 6. Basically, in this case, the control unit ECU is configured to perform the change also based on the use of the setting controller 10 as an alternative to the use of the pedals 5, 6.

Preferably, in the case of simultaneous use of the setting controller 10 and of the pedals 5, 6, the setting controller 10 prevails or is a priority, whereby the control unit ECU is configured to perform the change based on the use of the setting controller 10.

Specifically, rotations in opposite directions of the setting controller 10 are used to increase and decrease the target value, respectively.

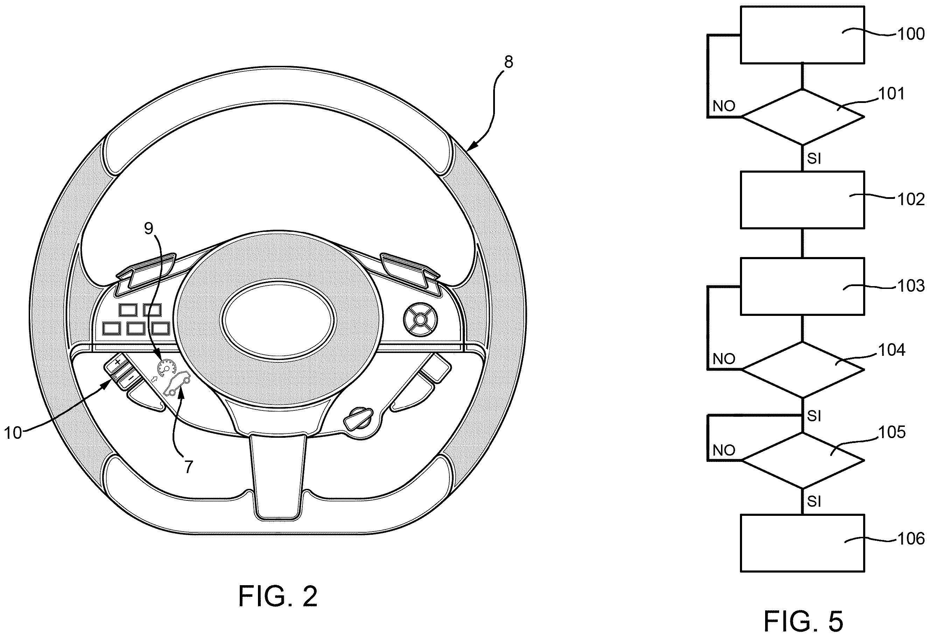

In the operation of the motor vehicle 1, the driver can trigger the activation of the HDC function using the controller 7 (block 100 of figure 5). In this case, the controller 7 emits an activation signal, which is received by the control unit ECU. In response to the activation of the HDC function by means of the controller 7, i.e. in response to the reception of the activation signal, the control unit ECU checks whether the specific operating conditions of compatibility with the HDC function are met (block 101 of figure 5).

If the specific operating conditions are met (YES output of block 101), the control unit ECU actually starts the HDC function by setting the target value, in particular equal to the determined actual value of the speed at the start (block 102 of figure 5).

At this point, the control unit ECU keeps the HDC function waiting to receive signals from the pedals 5, 6. If one of the pedals 5, 6 is depressed by the driver, this emits a depressing signal, which is received or detected by the control unit ECU.

If the control unit ECU receives the depressing signal (block 104, YES output of figure 5), the control unit ECU suspends the HDC function and waits for the release of the depressed one of the pedals 5, 6 (block 105 of figure 5) . Meanwhile, the motor vehicle 1 accelerates or decelerates accordingly.

When the release takes place, the control unit ECU detects the release (YES output of block 105), in particular from the depressing signal, changes the target value, in particular by setting it equal to the determined current actual value of the speed, and restarts the HDC function based on the modified target value (block 106 of figure 5).

Based on the above, in particular based on the operation described above, the control unit ECU performs a process for controlling the motor vehicle 1, wherein the process comprises the steps of
- starting the HDC function in response to an activation by the activation controller 7, wherein a target value for a speed of the motor vehicle 1 is set, and wherein at least one of the devices 3, 4 is controlled based on the set target value,
- performing a change in the set target value based on the use of at least one of the pedals 5, 6, and
- restarting the HDC function upon finalization of the change, thereby controlling the corresponding one of the devices 3, 4 according to the changed target value.

Furthermore, the process preferably comprises the step of temporarily suspending the HDC function during the depressing of one of the pedals 5, 6, whereby the depressing causes the acceleration or braking of the motor vehicle 1 accordingly.

In addition, the step of performing the change preferably comprises finalizing the change upon release of the depressed one of the pedals 5, 6.

Furthermore, the process preferably comprises the step of determining an actual value of the speed upon said release and finalizing the change upon release by causing the target value to be equal to the actual value.

Similarly, the process preferably comprises the step of setting the target value equal to the actual value of the speed at the start of the HDC function in response to the activation by the controller 7.

Furthermore, the process preferably comprises the step of stopping the HDC function if the speed-related information indicates that the speed exceeds the minimum threshold or is below the maximum threshold.

In general, any function performed by the control unit ECU can be a step of the process.

Owing to the above, the advantages of the motor vehicle 1 and of the process according to the invention are evident.

The use of the pedals 5, 6 to adjust the target value of the HDC function is very convenient for the driver, as it allows him/her to only use the feet already prepared to depress the pedals, without detaching his/her hands from the steering wheel 8.

In addition, by suspending and restarting the HDC function during use of the pedals 5, 6 and upon release thereof, respectively, the driver is allowed to use the pedals 5, 6 to adjust the speed of the vehicle, without the HDC function stopping and being able to be restarted only by means of the controller 7. In this case, the restart takes place automatically, by simply releasing the pedals 5, 6.

In addition, when the pedals 5, 6 are released, the HDC function maintains the current speed, so that the driver adjusts the target value in a very simple and intuitive way, not only without distractions, but even with greater involvement in driving.

Finally, the process and the motor vehicle 1 according to the invention can be subjected to changes and variants, which, though, do not go beyond the scope of protection set forth in the appended claims.

For the sake of clarity, it should be pointed out that numerical adjectives such as first, second, third, etc. do not necessarily have a limiting value but are used for the sole purpose of avoiding misunderstandings. In other words, the adjective first does not necessarily imply that there also is a second object, just like the adjective second does not necessarily imply that there is a first object. In addition, distinct numerical adjectives could also refer to coincident or different objects, without losing generality.

## Claims

1. Motor vehicle (1) comprising
- a propulsion device (3) controllable to accelerate the motor vehicle (1),
- a braking device (4) controllable to break the motor vehicle,
- an accelerator pedal (6) depressible to control an acceleration of the motor vehicle (1) via the propulsion device (3),
- a brake pedal (5) depressible to control a braking of the motor vehicle (1) via the braking device (4),
- an activation controller (7) operable by a driver to trigger an activation of a hill descent control function, and
- a control unit (ECU) configured to start the hill descent control function in response to said activation by setting a target value for a speed of the motor vehicle (1) and controlling at least one device between the braking device (4) and the propulsion device (3) according to the set target value,
**characterized in that** the control unit (ECU) is further configured to perform a change of the set target value based on the use of at least one pedal between the accelerator pedal and the brake pedal (5, 6) and to restart the hill descent control function at the finalization of the change by controlling said at least one device (3, 4) according to the changed target value.

2. The motor vehicle according to claim 1, further comprising a setting controller (10) manipulable by the driver and distinct from said at least one pedal (5, 6), wherein the control unit (ECU) is configured to perform said change also based on the use of the setting controller (10) as an alternative to the use of said at least one pedal (5, 6) .

3. The motor vehicle according to claim 2, wherein the control unit is configured to perform said change based on the use of the setting controller (10) in the case of simultaneous use of the setting controller (10) and said at least one pedal (5, 6).

4. The motor vehicle according to any one of the preceding claims, wherein the control unit (ECU) is configured to temporarily suspend the hill descent control function during a depressing of the said at least one pedal (5, 6), such that the depressing causes the motor vehicle (1) to accelerate or brake accordingly.

5. The motor vehicle according to claim 4, wherein the control unit is configured to finalize the change at a release of said at least one pedal (5, 6), thereby restarting the hill descent control function at said release.

6. The motor vehicle according to claim 5, wherein said release corresponds to reaching a first end position of said at least one pedal (5, 6), said at least one pedal (5, 6) being depressible from the first end position to a second end position.

7. The motor vehicle according to claim 5 or 6, wherein the control unit (ECU) is configured to determine a first actual value of the speed at said release and to finalize the change by bringing the target value to be equal to the first actual value.

8. The motor vehicle according to any one of the preceding claims, wherein the control unit (ECU) is configured to determine a second actual speed value in response to said activation and to set the target value equal to the second actual value in response to said activation.

9. The motor vehicle according to any one of the preceding claims, wherein the control unit (ECU) is configured to determine speed-related information and to stop the hill descent control function if the information indicates that the speed exceeds a first threshold or is below a second threshold.

10. The motor vehicle according to any of the preceding claims, wherein the control unit (ECU) is configured to determine information related to the speed and a slope of the road traveled by the motor vehicle (1), the control unit (ECU) being configured additionally to start the hill descent control function in response to said activation only if the information indicates that the speed and the slope fall within respective ranges of compatibility with the hill descent control function.

11. Process for controlling a motor vehicle (1), the process comprising the steps of
- starting a hill descent control function in response to an activation by an activation command (7), wherein a target value for a speed of the motor vehicle (1) is set, and wherein at least one device between a braking device (4) controllable to break the motor vehicle and a propulsion device (3) controllable to accelerate the motor vehicle (1) is controlled based on the set target value,
- performing a change of the set target value based on the use of at least one pedal between an accelerator pedal (6) depressible to control an acceleration of the motor vehicle via the propulsion unit (3) and a brake pedal (5) depressible to control a braking of the motor vehicle via the braking device (4), and restarting the hill descent control function at the finalization of the change, thereby controlling the said at least one device (3, 4) according to the changed target value.

12. The control process according to claim 11, further comprising the step of temporarily suspending the hill descent control function during a depressing of said at least one pedal (5, 6), such that the depressing causes the acceleration or braking of the motor vehicle (1) accordingly.

13. The control process according to claim 12, wherein performing the change comprises finalizing the change at a release of said at least one pedal (5, 6).

14. The control process according to claim 13, further comprising the step of determining a first actual value of the speed at said release, wherein finalizing the modification at said release comprises bringing the target value to be equal to the first actual value.
